(19) Europäisches Patentamt / European Patent Office / Office européen des brevets

(11) **EP 4 694 214 A1**

(12) **EUROPEAN PATENT APPLICATION**
published in accordance with Art. 153(4) EPC

(43) Date of publication:
**11.02.2026   Bulletin 2026/07**

(21) Application number: **24784446.7**

(22) Date of filing: **07.04.2024**

(51) International Patent Classification (IPC):
**H04W 4/02** $^{(2018.01)}$       **H04L 5/00** $^{(2006.01)}$
**H04W 64/00** $^{(2009.01)}$

(52) Cooperative Patent Classification (CPC):
**H04L 5/00; H04W 4/02; H04W 64/00;
H04W 72/044; H04W 72/0446; H04W 72/0453**

(86) International application number:
**PCT/CN2024/086462**

(87) International publication number:
**WO 2024/208365 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.04.2023   CN 202310367892**

(71) Applicant: **Datang Mobile Communications
Equipment Co., Ltd.
Beijing 100085 (CN)**

(72) Inventors:
• **LI, Hui
  Beijing 100085 (CN)**
• **REN, Xiaotao
  Beijing 100085 (CN)**
• **REN, Bin
  Beijing 100085 (CN)**
• **DA, Ren
  Beijing 100085 (CN)**

(74) Representative: **Ipsilon
12, avenue d'Italie
75013 Paris (FR)**

(54) **TERMINAL POSITIONING METHOD, FIRST TERMINAL, AND APPARATUS**

(57)    Provided in the present disclosure are a terminal positioning method, a first terminal, and an apparatus, wherein the method is applied to a first terminal. The method comprises: sending control signaling to a second terminal, wherein the control signaling is used for indicating transmission information of a positioning reference signal which is used in sidelink positioning, and the transmission information is used for positioning a first terminal or the second terminal.

Transmitting a control signaling to a second terminal, where the control signaling is used to indicate transmission information of positioning reference signals used in sidelink-positioning, and the transmission information is used for positioning of the first terminal or the second terminal. — S31

FIG. 3

**Description**

CROSS-REFERENCES TO RELATED APPLICATIONS

The present application claims priority to Chinese patent application No. 202310367892.8, filed on April 7, 2023, entitled "Terminal Positioning Method, First Terminal and Apparatus", which is incorporated herein by reference in its entirety.

FIELD

The present application relates to the field of communication technology, and in particular to a terminal positioning method, first terminal and apparatus.

BACKGROUND

In the 5th-generation (5G) new radio (NR) system, a sidelink (SL) system can effectively support services that require low latency and high reliability, such as vehicle-to-everything (V2X) services and public safety services. The sidelink is also called a side link, a secondary link, or an edge link.

Taking the internet of vehicles business as an example, vehicle positioning is usually required, but the current SL system does not support positioning technology. Therefore, how to realize positioning in the SL system is an urgent problem to be solved by those skilled in the art.

BRIEF SUMMARY

The present application provides a terminal positioning method, a first terminal and an apparatus, realizing terminal positioning in the SL system.

In a first aspect, an embodiment of the present application provides a terminal positioning method, performed by a first terminal, including:

transmitting a control signaling to a second terminal, where the control signaling is used to indicate transmission information of positioning reference signals used in sidelink-positioning, and the transmission information is used for positioning of the first terminal or the second terminal.

In some embodiments, in case that a number of transmissions of the positioning reference signals used in the sidelink-positioning is N, N is an integer greater than or equal to 1, the control signaling includes at least one of following:

a time domain resource allocation field, where the time domain resource allocation field is used to indicate a transmission slot of a positioning reference signal used in each of N transmissions;

a resource indication field, where the resource indication field is used to indicate a positioning reference signal used in each of N transmissions;

a resource symbol indication field, where the resource symbol indication field is used to indicate a symbol position of a positioning reference signal used in each of N transmissions within a corresponding transmission slot;

an existence indication field, where the existence indication field is used to indicate whether at least one positioning reference signal exists in each transmission resource of a physical sidelink shared channel, and the at least one positioning reference signal belongs to positioning reference signals used in N transmissions;

an existence indication information, where the existence indication information is used to indicate whether positioning reference signals used in N transmissions exist in transmission resources of a physical sidelink shared channel; or

at least one of time domain information, frequency domain information, or power information of positioning reference signals used in N transmissions.

In some embodiments, in case that a number of the time domain resource allocation field is one, the time domain resource allocation field includes the transmission slot of the positioning reference signal used in each of N transmissions.

In some embodiments, the transmission slot of the positioning reference signal used in each of N transmissions is determined based on a transmission order of the positioning reference signals used in the sidelink-positioning configured by a higher layer.

In some embodiments,

in case that a number of the time domain resource allocation fields is at least two, a first time domain resource allocation field includes a transmission slot of a positioning reference signal used in the sidelink-positioning corresponding to the first terminal, a second time domain resource allocation field includes a transmission slot of a positioning reference signal used in the sidelink-positioning corresponding to the second terminal, and the positioning reference signals used in N transmissions include the positioning reference signal corresponding to the first terminal and/or the positioning reference signal corresponding to the second terminal.

In some embodiments,

correspondence between the at least two time domain resource allocation fields and the first terminal and the second terminal is predefined.

In some embodiments,

a number of the time domain resource allocation field is determined based on a higher layer configuration.

In some embodiments,

the positioning reference signal used in each of N transmissions is determined based on a positioning reference signal resource configured by a higher layer.

In some embodiments,

in case that a number of the time domain resource allocation fields and a number of the resource indication fields are multiple, the multiple time domain resource allocation fields correspond one-to-one to the multiple resource indication fields.

In some embodiments,

in case that a transmission type of the positioning reference signal used in the sidelink-positioning is a non-reporting sidelink-positioning reference signal transmission type, a number of the resource symbol indication field is at least one.

In some embodiments,

in case that the control signaling includes a two-stage control signaling, one or more of the resource symbol indication field, the resource indication field, and the existence indication field are set in a second-stage control signaling.

In some embodiments,

in case that the control signaling includes a two-stage control signaling, the existence indication information is indicated by setting one or more information fields in sidelink control information (SCI) format 1-A in Rel-17 to specific bit values.

In some embodiments,

a value of a second-stage SCI format field in the SCI format 1-A is set to a reserved bit "11".

In a second aspect, an embodiment of the present application provides a first terminal, including a memory, a transceiver, and a processor,

where the memory is used to store a computer program, the transceiver is used to transmit and receive data under control of the processor, and the processor is used to read the computer program in the memory and perform following operation: transmitting a control signaling to a second terminal, where the control signaling is used to indicate transmission information of positioning reference signals used in sidelink-positioning, and the transmission information is used for positioning of the first terminal or the second terminal.

In some embodiments, in case that a number of transmissions of the positioning reference signals used in the sidelink-positioning is N and N is an integer greater than or equal to 1, the control signaling includes at least one of following:

a time domain resource allocation field, where the time domain resource allocation field is used to indicate a transmission slot of a positioning reference signal used in each of N transmissions;

a resource indication field, where the resource indication field is used to indicate a positioning reference signal used in each of N transmissions;

a resource symbol indication field, where the resource symbol indication field is used to indicate a symbol position of a positioning reference signal used in each of N transmissions within a corresponding transmission slot;

an existence indication field, where the existence indication field is used to indicate whether at least one positioning reference signal exists in each transmission resource of a physical sidelink shared channel, and the at least one positioning reference signal belongs to positioning reference signals used in N transmissions;

an existence indication information, where the existence indication information is used to indicate whether positioning reference signals used in N transmissions exist in transmission resources of a physical sidelink shared channel; or

at least one of time domain information, frequency domain information, or power information of positioning reference signals used in N transmissions.

In some embodiments,
in case that a number of the time domain resource allocation field is one, the time domain resource allocation field includes the transmission slot of the positioning reference signal used in each of N transmissions.

In some embodiments,
the transmission slot of the positioning reference signal used in each of N transmissions is determined based on a transmission order of the positioning reference signals used in the sidelink-positioning configured by a higher layer.

In some embodiments,
in case that a number of the time domain resource allocation fields is at least two, a first time domain resource allocation field includes a transmission slot of a positioning reference signal used in the sidelink-positioning corresponding to the first terminal, a second time domain resource allocation field includes a transmission slot of a positioning reference signal used in the sidelink-positioning corresponding to the second terminal, and the positioning reference signals used in N transmissions include the positioning reference signal corresponding to the first terminal and/or the positioning reference signal corresponding to the second terminal.

In some embodiments,
correspondence between the at least two time domain resource allocation fields and the first terminal and the second terminal is predefined.

In some embodiments,
a number of the time domain resource allocation field is determined based on a higher layer configuration.

In some embodiments,
the positioning reference signal used in each of N transmissions is determined based on a positioning reference signal resource configured by a higher layer.

In some embodiments,
in case that a number of the time domain resource allocation fields and a number of the resource indication fields are multiple, the multiple time domain resource allocation fields correspond one-to-one to the multiple resource indication fields.

In some embodiments,
in case that a transmission type of the positioning reference signal used in the sidelink-positioning is a non-reporting sidelink-positioning reference signal transmission type, a number of the resource symbol indication field is at least one.

In some embodiments,
in case that the control signaling includes a two-stage control signaling, one or more of the resource symbol indication field, the resource indication field, and the existence indication field are set in a second-stage control signaling.

In some embodiments,
in case that the control signaling includes a two-stage control signaling, the existence indication information is indicated by setting one or more information fields in sidelink control information (SCI) format 1-A in Rel-17 to specific bit values.

In some embodiments,
a value of a second-stage SCI format field in the SCI format 1-A is set to a reserved bit "11".

In a third aspect, an embodiment of the present application provides a terminal positioning apparatus, including:
a transmitting module, used to transmit a control signaling to a second terminal, where the control signaling is used to indicate transmission information of positioning reference signals used in sidelink-positioning, and the transmission information is used for positioning of the first terminal or the second terminal.

In some embodiments, in case that a number of transmissions of the positioning reference signals used in the sidelink-positioning is N, N is an integer greater than or equal to 1, the control signaling includes at least one of following:

a time domain resource allocation field, where the time domain resource allocation field is used to indicate a transmission slot of a positioning reference signal used in each of N transmissions;

a resource indication field, where the resource indication field is used to indicate a positioning reference signal used in each of N transmissions;

a resource symbol indication field, where the resource symbol indication field is used to indicate a symbol position of a positioning reference signal used in each of N transmissions within a corresponding transmission slot;

an existence indication field, where the existence indication field is used to indicate whether at least one positioning reference signal exists in each transmission resource of a physical sidelink shared channel, and the at least one positioning reference signal belongs to positioning reference signals used in N transmissions;

an existence indication information, where the existence indication information is used to indicate whether positioning reference signals used in N transmissions exist in transmission resources of a physical sidelink shared channel; or

at least one of time domain information, frequency domain information, or power information of positioning reference signals used in N transmissions.

In some embodiments,
in case that a number of the time domain resource allocation field is one, the time domain resource allocation field includes the transmission slot of the positioning reference signal used in each of N transmissions.

In some embodiments,
the transmission slot of the positioning reference signal used in each of N transmissions is determined based on a transmission order of the positioning reference signals used in the sidelink-positioning configured by a higher layer.

In some embodiments,
in case that a number of the time domain resource allocation fields is at least two, a first time domain resource allocation field includes a transmission slot of a positioning reference signal used in the sidelink-positioning corresponding to the first terminal, a second time domain resource allocation field includes a transmission slot of a positioning reference signal used in the sidelink-positioning corresponding to the second terminal, and the positioning reference signals used in N transmissions include the positioning reference signal corresponding to the first terminal and/or the positioning reference signal corresponding to the second terminal.

In some embodiments,
correspondence between the at least two time domain resource allocation fields and the first terminal and the second terminal is predefined.

In some embodiments,
a number of the time domain resource allocation field is determined based on a higher layer configuration.

In some embodiments,
the positioning reference signal used in each of N transmissions is determined based on a positioning reference signal resource configured by a higher layer.

In some embodiments,
in case that a number of the time domain resource allocation fields and a number of the resource indication fields are multiple, the multiple time domain resource allocation fields correspond one-to-one to the multiple resource indication fields.

In some embodiments,
in case that a transmission type of the positioning reference signal used in the sidelink-positioning is a non-reporting sidelink-positioning reference signal transmission type, a number of the resource symbol indication field is at least one.

In some embodiments,
in case that the control signaling includes a two-stage control signaling, one or more of the resource symbol indication field, the resource indication field, and the existence indication field are set in a second-stage control signaling.

In some embodiments,
in case that the control signaling includes a two-stage control signaling, the existence indication information is indicated by setting one or more information fields in sidelink control information (SCI) format 1-A in Rel-17 to specific bit values.

In some embodiments,
a value of a second-stage SCI format field in the SCI format 1-A is set to a reserved bit "11".

In a fourth aspect, an embodiment of the present application provides a computer-readable storage medium storing a computer program, where the computer program is used to cause a computer to execute any terminal positioning method described with respect to the first aspect above.

The present application provides a terminal positioning method, a first terminal and an apparatus, where the first terminal transmits a control signaling to a second terminal, the control signaling is used to indicate transmission information of positioning reference signals used in sidelink-positioning, and the transmission information is used for positioning of the first terminal or the second terminal. After the transmission information of the positioning reference signals used in the sidelink-positioning is indicated by the control signaling, the positioning reference signals can be transmitted between the first terminal and the second terminal based on the transmission information, and the round-trip time between the first terminal and the second terminal can be determined by the information of the time when the first terminal and the second terminal transmit the positioning reference signals, so that the distance between the first terminal and the second terminal can be determined based on the round-trip time, and the first terminal or the second terminal can be located based on the distance between the first terminal and the second terminal. In the present application, the first terminal transmits a control signaling to the second terminal to indicate transmission information of the positioning reference signals used in the sidelink-positioning, realizing resource allocation of the positioning reference signals used for positioning in the SL system, and thus realizing terminal positioning in the SL system.

BRIEF DESCRIPTION OF THE DRAWINGS

To clearly illustrate the solutions in the embodiments of the present application or the related art, the drawings used in the description of the embodiments or the related art are briefly described below. The drawings in the following description are only some embodiments of the present application, and other drawings can be obtained according to these drawings without any creative effort for those skilled in the art.

FIG. 1 is a first schematic diagram of positioning based on multi-RTT positioning technology according to an embodiment of the present application;

FIG. 2 is a second schematic diagram of positioning based on multi-RTT positioning technology according to an embodiment of the present application;

FIG. 3 is a schematic flow chart of a terminal positioning method according to an embodiment of the present application;

FIG. 4 is a schematic diagram of transmission of a positioning reference signal according to an embodiment of the present application;

FIG. 5 is a first schematic diagram of a first terminal transmitting a control signaling according to an embodiment of the present application;

FIG. 6 is a second schematic diagram of a first terminal transmitting a control signaling according to an embodiment of the present application;

FIG. 7 is a third schematic diagram of a first terminal transmitting a control signaling according to an embodiment of the present application;

FIG. 8 is a third schematic diagram of a first terminal transmitting a control signaling according to an embodiment of the present application;

FIG. 9 is a schematic structural diagram of a first terminal according to an embodiment of the present application;

FIG. 10 is a schematic structural diagram of a terminal positioning apparatus according to an embodiment of the present application.

DETAILED DESCRIPTION

To make the objectives, technical solutions, and advantages of the present application more clear, the solutions of the present application will be clearly and completely described below in conjunction with the accompanying drawings. Obviously, the embodiments described are only part of the embodiments of the present application, not all of them. All other embodiments obtained by those skilled in the art based on the embodiments of the present application without creative effort shall fall within the scope of protection of the present application.

To meet positioning requirements, the 5G NR system supports multiple kinds of positioning technology based on a Uu interface (a communication interface between a terminal and a network device), including downlink positioning technology, uplink positioning technology, and hybrid uplink and downlink positioning technology. The downlink positioning technology includes NR downlink time difference of arrival (DL-TDOA) and NR downlink angle of departure (DL-AoD), the uplink positioning technology includes NR uplink time difference of arrival (UL-TDOA) and NR uplink angle of arrival (UL-AoA), and the hybrid uplink and downlink positioning technology includes NR multi round-trip time (multi-RTT).

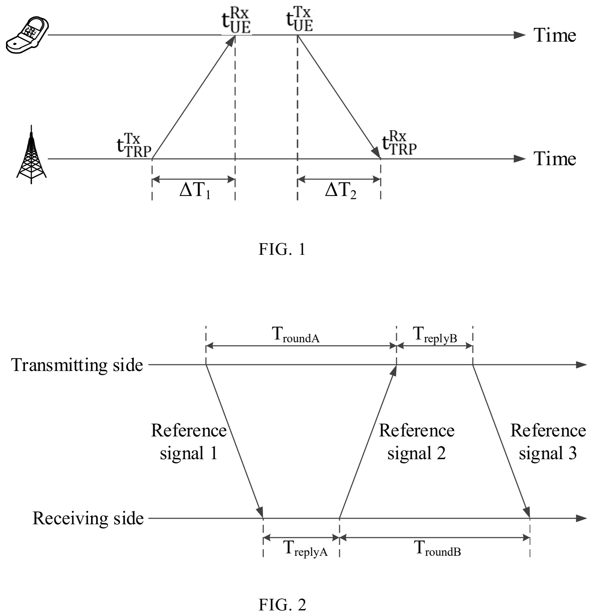

In the NR multi-RTT positioning technology, the time difference between arrival time of a downlink (DL) positioning reference signal (PRS) from each transmission and reception point (TRP) measured by the terminal and the time when the terminal transmits a sounding reference signal-position (SRS-Pos), which is called the receive-transmit (Rx-Tx) time difference of the terminal, and the time difference between arrival time of the SRS-Pos from the terminal measured by each TRP and the time when the TRP transmits the DL PRS, which is called the Rx-Tx time difference of the network device, are calculated for positioning. This process can be understood, for example, by referring to FIG. 1. The terminal herein can be, for example, a vehicle network terminal, or another mobile terminal such as a mobile phone terminal. Other similar terminals known to those skilled in the art can be applied here.

FIG. 1 is a first schematic diagram of positioning based on multi-RTT positioning technology according to an embodiment of the present application. As shown in FIG. 1, the network device can preconfigure DL PRS resources and SRS-Pos resources in the positioning process.

During positioning, the terminal transmits an SRS-Pos to a TRP based on the SRS-Pos resources configured by the network device, and the time when the terminal transmits the SRS-Pos is $t_{UE}^{Tx}$. The terminal uses auxiliary data provided by location management function (LMF) to obtain configuration information of the DL PRSs transmitted by surrounding TRPs. Based on the configuration information of the DL PRSs of each TRP, the terminal receives the downlink PRSs transmitted by each TRP, and obtains the arrival time of the downlink PRSs, which is recorded as $t_{UE}^{Rx}$. Then, based on the measured arrival time of the DL PRSs and the time $t_{UE}^{Tx}$ when the terminal transmits the SRS-Pos, the terminal obtains the Rx-Tx time difference of the terminal, which is $(t_{UE}^{Rx} - t_{UE}^{Tx})$.

For TRPs, each TRP transmits a DL PRS to the terminal based on the DL PRS resources configured by the network device, and the time when the TRP transmits the DL PRS is $t_{TRP}^{Tx}$. Each TRP uses auxiliary data provided by the LMF to obtain configuration information of the SRS-Pos transmitted by the terminal, receives the SRS-Pos transmitted by the terminal based on the configuration information of the SRS-Pos, and obtains the arrival time of the SRS-Pos, which is recorded as $t_{TRP}^{Rx}$. Then, based on the time difference between the measured arrival time $t_{TRP}^{Rx}$ of the SRS-Pos and the time when the TRP transmits the DL PRS, each TRP obtains the Rx-Tx time difference of gNB, which is $(t_{TRP}^{Rx} - t_{TRP}^{Tx})$.

The terminal reports the obtained Rx-Tx time difference of the terminal to the LMF, and each TRP also reports the obtained Rx-Tx time difference of the network device to the LMF. After obtaining the Rx-Tx time difference of the terminal and the Rx-Tx time difference of the network device, the LMF obtains the distance between the terminal and each TRP based on the Rx-Tx time difference of the terminal and the Rx-Tx time difference of the network device.

In an embodiment, for any TRP, based on the Rx-Tx time difference of the terminal and the Rx-Tx time difference of the network device corresponding to the TRP, the round-trip time between the terminal and the TRP can be obtained, as shown in the following formula (1):

$$RTT = (\Delta T_1 + \Delta T_2) = (t_{UE}^{Rx} - t_{TRP}^{Tx}) + (t_{TRP}^{Rx} - t_{UE}^{Tx})$$

$$= (t_{UE}^{Rx} - t_{UE}^{Tx}) + (t_{TRP}^{Rx} - t_{TRP}^{Tx}) \qquad (1)$$

where RTT is the round-trip time between the terminal and the TRP, $(t_{UE}^{Rx} - t_{UE}^{Tx})$ is the Rx-Tx time difference of the terminal, and $(t_{TRP}^{Rx} - t_{TRP}^{Tx})$ is the Rx-Tx time difference of the network device.

After determining the round-trip time RTT between the terminal and the TRP, the distance S between the terminal and the TRP can be obtained based on the RTT, as shown in the following formula (2):

$$S = \frac{1}{2}c * RTT \qquad (2)$$

where S is the distance between the terminal and the TRP, c is the speed of light, that is, the transmission speed of a signal, and RTT is the round-trip time between the terminal and the TRP.

The distance between the terminal and each TRP can be determined based on the formulas (1) and (2) above. In conjunction with other known information (such as the geographic coordinates of the TRP), the LMF can calculate the location of the terminal and realize terminal positioning.

FIG. 1 illustrates a positioning solution based on the multi-RTT positioning technology, which is single-sided RTT positioning technology. In some embodiments, double-sided RTT positioning technology can be used to compensate for clock drift on a transmitting side and a receiving side to further improve the positioning accuracy of the terminal. The double-sided RTT positioning technology can be understood in conjunction with FIG. 2.

FIG. 2 is a second schematic diagram of positioning based on multi-RTT positioning technology according to an embodiment of the present application. As shown in FIG. 2, the network device can preconfigure DL PRS resources and SRS-Pos resources in the positioning process.

FIG. 2 illustrates an example where the transmitting side transmits reference signals twice and the receiving side transmits a reference signal once. The transmitting side transmits a reference signal 1 to the receiving side, the receiving side transmits a reference signal 2 to the transmitting side, and then the transmitting side transmits a reference signal 3 to the receiving side. The duration between the time when the transmitting side transmits the reference signal 1 and the time when the transmitting side receives the reference signal 2 is $T_{roundA}$, the duration between the time when the receiving side receives the reference signal 1 and the time when the receiving side transmits the reference signal 2 is $T_{replyA}$, the duration between the time when the transmitting side receives the reference signal 2 and the time when the transmitting side transmits the reference signal 3 is $T_{replyB}$, and the duration between the time when the receiving side transmits the reference signal 2 and the time when the receiving side receives the reference signal 3 is $T_{roundB}$. Therefore, the transmission time T from the transmitting side to the receiving side can be expressed as:

$$T = \frac{T_{roundA} \times T_{roundB} - T_{replyA} \times T_{replyB}}{T_{roundA} + T_{roundB} + T_{replyA} + T_{replyB}} \qquad (3)$$

In the example of FIG. 2, for the transmitting side, the transmission order of reference signals is "transmitting, receiving, transmitting". That is, the transmitting side transmits the reference signals twice and receives the reference signal once, and the time when the transmitting side receives the reference signal is between the two times when the transmitting side transmits the reference signals twice.

In some embodiments, the transmission order of the double-sided RTT technology can be flexibly changed. For example, a transmission order "transmitting, transmitting, receiving" can be used. That is, the transmitting side transmits the reference signals twice and receives the reference signal once, and the time when the transmitting side receives the reference signal is after the two times when the transmitting side transmits the reference signals twice. In other embodiments, the transmitting side can also transmit the reference signal only once, and the receiving side transmits the reference signals twice. The time when the transmitting side transmits the reference signal and the two times when the receiving side transmits the reference signals twice can also be flexibly adjusted, which will not be further described here.

In the above embodiments, the terminal positioning technology based on uplink and downlink systems is described. However, currently, there is no corresponding resource allocation mechanism for the positioning reference signal (also called a sidelink-positioning reference signal (SL-PRS)) used in sidelink-positioning to support the terminal positioning technology in the SL system. On the basis, an embodiment of the present application provides a terminal positioning method, which realizes the terminal positioning in the SL system through a SL-PRS resource allocation mechanism. The following describes the solutions of the embodiments of the present application with reference to the accompanying drawings.

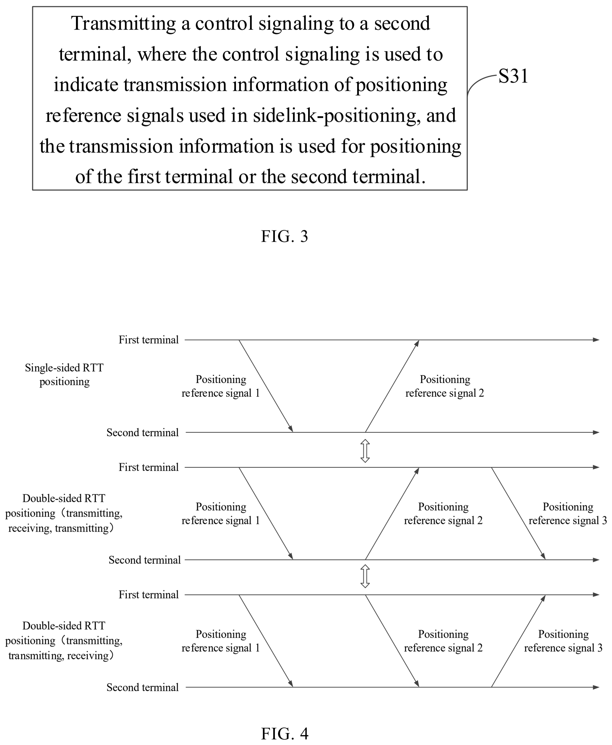

FIG. 3 is a schematic flow chart of a terminal positioning method according to an embodiment of the present application. The method is performed by a first terminal. As shown in FIG. 3, the method includes:

S31, transmitting a control signaling to a second terminal, where the control signaling is used to indicate transmission information of positioning reference signals used in sidelink-positioning, and the transmission information is used for positioning of the first terminal or the second terminal.

In an embodiment, the first terminal can be a target terminal, and the second terminal can be an anchor terminal. In an embodiment, the first terminal can be an anchor terminal, and the second terminal can be a target terminal.

To support RTT positioning in the SL system, the first terminal needs to transmit a positioning reference signal to the second terminal and receive a positioning reference signal transmitted by the second terminal, thereby obtaining the Rx-Tx time difference of the first terminal and the Rx-Tx time difference of the second terminal. Then, based on the Rx-Tx time difference of the first terminal and the Rx-Tx time difference of the second terminal, the RTT between the first terminal and the second terminal is obtained, and the distance between the first terminal and the second terminal is calculated based on the RTT, so as to realize positioning of the first terminal and/or the second terminal.

In an embodiment, the first terminal transmits a control signaling to the second terminal. The control signaling is also called a sidelink control signaling (SCI) and is a one-stage control signaling or a two-stage control signaling.

The control signaling includes one or more information fields, which are used to indicate transmission information of positioning reference signals. The positioning reference signals can be transmitted once or multiple times, and the control signaling can indicate the transmission information of a positioning reference signal in each transmission.

After receiving the control signaling, the second terminal can determine the transmission information of the positioning reference signals based on the control signaling, and determine the positioning reference signals used in the sidelink-positioning based on the transmission information. Thus, the first terminal and the second terminal can perform transmission based on the determined positioning reference signals. Based on the transmission time when the first terminal transmits a positioning reference signal and the reception time when the first terminal receives a positioning reference signal transmitted by the second terminal, the Rx-Tx time difference of the first terminal can be determined. Based on the transmission time when the second terminal transmits a positioning reference signal and the reception time when the second terminal receives a positioning reference signal transmitted by the first terminal, the Rx-Tx time difference of the second terminal can be determined. Then, based on the Rx-Tx time difference of the first terminal and the Rx-Tx time difference of the second terminal, the RTT between the first terminal and the second terminal can be determined. Based on the RTT between the first terminal and the second terminal and the speed of light, the distance between the first terminal and the second terminal can be determined. Based on the distance between the first terminal and the second terminal, the positioning of the first terminal or the second terminal can be performed.

In an embodiment, in case that the number of transmissions of the positioning reference signals used in the sidelink-positioning is N (N is an integer greater than or equal to 1), the control signaling includes at least one of following (1.1) to (1.6):

(1.1) time domain resource allocation field

The time domain resource allocation field is used to indicate a transmission slot of a positioning reference signal used in each of N transmissions.

In an embodiment, for the sidelink between the first terminal and the second terminal, the positioning reference signals used in N transmissions can include a positioning reference signal transmitted by the first terminal to the second terminal, or can include a positioning reference signal transmitted by the second terminal to the first terminal. The transmission slots of the positioning reference signals used in N transmissions can include a transmission slot in which the first terminal transmits a positioning reference signal to the second terminal, and can also include a transmission slot in which the second terminal transmits a positioning reference signal to the first terminal. The time domain resource allocation field included in the control signaling is used to indicate the transmission slot in which the first terminal transmits a positioning reference signal to the second terminal, and/or the transmission slot in which the second terminal transmits a positioning reference signal to the first terminal.

An example is illustrated, in which the positioning reference signal transmitted by the first terminal to the second terminal is positioning reference signal A, and the positioning reference signal transmitted by the second terminal to the first terminal is positioning reference signal B. In this example, the first terminal transmits the positioning reference signal A based on the transmission slot of the positioning reference signal A, and the second terminal can determine an approximate time period for receiving the positioning reference signal A based on the transmission slot of the positioning reference signal A, thereby successfully receiving the positioning reference signal A. Correspondingly, the second terminal transmits the positioning reference signal B based on the transmission slot of the positioning reference signal B, and the first terminal can determine an approximate time period for receiving the positioning reference signal B based on the transmission slot of the positioning reference signal B, thereby successfully receiving the positioning reference signal B.

The number of the time domain resource allocation fields included in the control signaling is one or more. In case that N is equal to 1, the time domain resource allocation field is used to indicate a transmission slot of one positioning reference signal used in the sidelink-positioning, and the number of the time domain resource allocation field is also one.

In case that N is greater than 1, the number of the time domain resource allocation fields is one or more. In case that the number of the time domain resource allocation field is one, the time domain resource allocation field indicates the transmission slots of the N positioning reference signals used in the sidelink-positioning. In an embodiment, the time domain resource allocation field includes the transmission slot of the positioning reference signal used in each of N transmissions. After the first terminal transmits the control signaling to the second terminal, the second terminal obtains the time domain resource allocation field based on the control signaling, and determines the transmission slot of the positioning reference signal used in each of N transmissions. In an embodiment, the number of the time domain resource allocation field is determined based on a higher layer configuration.

In case that the number of the time domain resource allocation field is one, the transmission slot of the positioning reference signal used in each of N transmissions is determined based on the transmission order of the positioning reference signals used in the sidelink-positioning configured by a higher layer.

In case that the number of the time domain resource allocation fields is at least two, the time domain resource allocation fields can include a first time domain resource allocation field and a second time domain resource allocation field. The first time domain resource allocation field includes a transmission slot of a positioning reference signal used in the sidelink-positioning corresponding to the first terminal, the second time domain resource allocation field includes a transmission slot of a positioning reference signal used in the sidelink-positioning corresponding to the second terminal, and the positioning reference signals used in N transmissions include the positioning reference signal corresponding to the first terminal and/or the positioning reference signal corresponding to the second terminal.

In case that the number of the time domain resource allocation fields is at least two, the correspondence between the at least two time domain resource allocation fields and the first terminal and the second terminal is predefined. The predefined correspondence can be defined by a protocol, preconfigured for the terminal by the network device, self-defined by the terminal, or determined in advance by negotiation between the network device and the terminal.

(1.2) resource indication field

The resource indication field is used to indicate a positioning reference signal used in each of N transmissions.

The number of the resource indication fields included in the control signaling is one or more. In case that N is equal to 1, the resource indication field is used to indicate one positioning reference signal used in the sidelink-positioning, and the number of the resource indication fields is also one.

In case that N is greater than 1, the number of the resource indication fields is one or more. In case that the number of the resource indication field is one, the resource indication field indicates the N positioning reference signals used in the sidelink-positioning. In an embodiment, the resource indication field includes the positioning reference signals used in N transmissions in the sidelink-positioning. After the first terminal transmits the control signaling to the second terminal, the second terminal obtains the resource indication field based on the control signaling, and determines the positioning reference signals used in N transmissions in the sidelink-positioning.

In case that the number of the resource indication fields is at least two, each resource indication field includes a positioning reference signal of the first terminal and/or a positioning reference signal of the second terminal, and the positioning reference signals used in N transmissions includes the positioning reference signal of the first terminal and/or the positioning reference signal of the second terminal.

In an embodiment, in case that the number of the time domain resource allocation fields and the number of the resource indication fields are multiple, the multiple time domain resource allocation fields correspond one-to-one to the multiple resource indication fields. The resource indication fields and the corresponding time domain resource allocation fields can be used to determine the positioning reference signals used in the sidelink-positioning and the transmission slots of the positioning reference signals. In an embodiment, the positioning reference signal used in each of N transmissions is determined based on a positioning reference signal resource configured by a higher layer.

(1.3) resource symbol indication field

The resource symbol indication field is used to indicate a symbol position of a positioning reference signal used in each of N transmissions within a corresponding transmission slot.

When a positioning request message is configured with the single-sided RTT positioning or the double-sided RTT positioning without reporting, the resource symbol indication field can indicate the symbol position of the positioning reference signal used in each of N transmissions of positioning reference signals within the corresponding transmission slot.

(1.4) existence indication field

The existence indication field is used to indicate whether at least one positioning reference signal exists in each transmission resource of a physical sidelink shared channel (PSSCH), and the at least one positioning reference signal belongs to the positioning reference signals used in N transmissions.

In case that the control signaling is a two-stage control signaling, the first-stage control signaling uses the SCI format 1-A format defined in Rel-17. When one or more information fields in the SCI format 1-A format are set to specific bit values, it is indicated that a positioning reference signal resource exists in the PSSCH resources corresponding to the SCI format 1-A. When one or more information fields in the SCI format 1-A format are not set to specific bit values, it is indicated that no positioning reference signal resources exist in the PSSCH resources corresponding to the SCI format 1-A. The SCI format is used for PSSCH scheduling and can be used to indicate whether the PSSCH transmission resources include a positioning reference signal. Subsequently, the first-stage control signaling can use an SCI format with similar functions, such as an SCI format 1-C, an SCI format 1-D, and the like.

(1.5) existence indication information

The existence indication information is used to indicate whether the positioning reference signals used in N transmissions exist in PSSCH transmission resources. The existence indication information can be used to determine that the positioning reference signals used in N transmissions exist in the PSSCH transmission resources, or that the positioning reference signals used in N transmissions do not exist in the PSSCH transmission resources.

(1.6) at least one of time domain information, frequency domain information, or power information of the positioning reference signals used in N transmissions.

After determining the time domain information of the positioning reference signals used in N transmissions, the first terminal and the second terminal can transmit the positioning reference signals in the corresponding time domain based on the time domain information of the positioning reference signals used in N transmissions. After determining the frequency domain information of the positioning reference signals used in N transmissions, the first terminal and the second terminal can transmit the positioning reference signals in the corresponding frequency domain based on the frequency domain information of the positioning reference signals used in N transmissions. After determining the power information of the positioning reference signals used in N transmissions, the first terminal and the second terminal can transmit the positioning reference signals with corresponding power based on the power information of the positioning reference signals used in N transmissions.

In the above embodiments, the information field included in control signaling is described. The following specific examples describe the process of implementing terminal positioning using different information fields included in control signaling. It should be noted that a single operation of the sidelink-positioning includes N transmissions of positioning reference signals. In each embodiment of the present application, "N transmissions" refers to N transmission processes of positioning reference signals.

First, the transmission order of the positioning reference signals between the first terminal and the second terminal in the case of the single-sided RTT and the double-sided RTT is described with reference to FIG. 4.

FIG. 4 is a schematic diagram of transmission of a positioning reference signal according to an embodiment of the present application. As shown in FIG. 4, different transmission orders of positioning reference signals for the single-sided RTT and the double-sided RTT are respectively illustrated.

In the case of the single-sided RTT, N=2, the first terminal first transmits a positioning reference signal 1 to the second terminal, and then the second terminal transmits a reference signal 2 to the first terminal.

In the case of the double-sided RTT, FIG. 4 illustrates two different transmission orders. In case of the first transmission order, the first terminal transmits a positioning reference signal 1 to the second terminal. After receiving the positioning reference signal 1, the second terminal transmits a positioning reference signal 2 to the first terminal. After receiving the positioning reference signal 2 transmitted by the first terminal, the first terminal transmits a positioning reference signal 3 to the second terminal. For the first terminal, the transmission order of the three reference signals is "transmitting, receiving, transmitting".

In case of the second transmission order, the first terminal transmits a positioning reference signal 1 to the second terminal. After the second terminal receives the positioning reference signal 1, the first terminal continues to transmit a positioning reference signal 2 to the second terminal. After receiving the positioning reference signal 2 transmitted by the first terminal, the second terminal transmits a positioning reference signal 3 to the first terminal. For the first terminal, the order of the three reference signals is "transmitting, transmitting, receiving".

Taking the transmission order of several positioning reference signals illustrated in FIG. 4 as an example, the following describes an implementation for positioning the first terminal or the second terminal by indicating the positioning reference signals used in the sidelink-positioning using the control signaling. It should be noted that FIG. 4 is merely an example and does not limit the value of N or the transmission order of positioning reference signals.

It should be noted that the embodiments of the present application provide a dedicated resource pool for positioning reference signals and a shared resource pool, where the resources in the dedicated resource pool are all dedicated resources for positioning and do not include communication resources, while the shared resource pool includes not only dedicated resources for positioning but also communication resources.

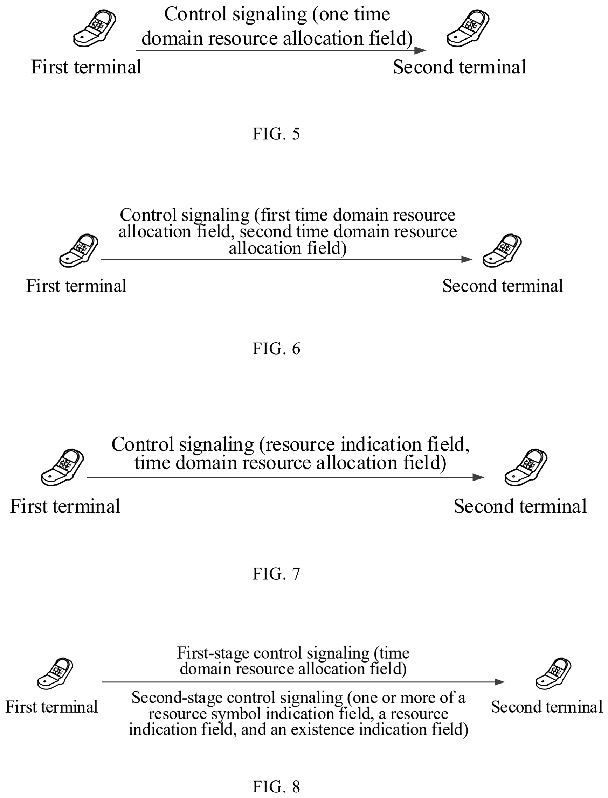

FIG. 5 is a first schematic diagram of a first terminal transmitting a control signaling according to an embodiment of the present application. As shown in FIG. 5, the first terminal is preconfigured with a dedicated resource pool for SL positioning, and the dedicated resource pool includes time-frequency resources for positioning reference signals.

The first terminal determines to perform double-sided RTT positioning. The first terminal determines the positioning reference signal resources of the first terminal and the positioning reference signal resources of the second terminal from the dedicated resource pool through perception, and indicates the positioning reference signal resources of the first terminal and the positioning reference signal resources of the second terminal to the second terminal through the control signaling.

The control signaling includes one time domain resource allocation field, which can indicate transmission slots of the positioning reference signals used in N transmissions, where the value of N can be one of {1, 2, 3}.

For the double-sided RTT positioning, the value of N is configured as 3. For the single-sided RTT, the value of N is configured as 2. The value of N can be configured through a higher layer signaling or determined by a positioning type in the positioning request message. For example, in case that the positioning type configured in the positioning request message is the single-sided RTT, it is implicitly determined that N=2. In case that the positioning type configured in the positioning request message is the double-sided RTT, it is implicitly determined that N=3. In FIG. 5, using the double-sided RTT positioning as an example, where N = 3.

In an embodiment, the positioning reference signal used in each of N transmissions can be determined based on positioning reference signal resources configured by a higher layer. For example, in FIG. 5, there are three transmissions of positioning reference signals, including two transmissions of positioning reference signals from the first terminal to the second terminal and one transmission of a positioning reference signal from the second terminal to the first terminal. Based on the higher layer configuration, the first terminal can obtain the positioning reference signal used in each transmission of the three transmissions of positioning reference signals, and accordingly, the second terminal can also obtain the positioning reference signal used in each transmission of the three transmissions of positioning reference signals.

In an embodiment, the correspondence between the transmission of the positioning reference signals used in N transmissions and the positioning reference signal resource configuration used by the first terminal, and the correspondence between the transmission of the positioning reference signals used in N transmissions and the positioning reference signal resource configuration used by the second terminal can be configured through a higher layer signaling.

In an embodiment, the correspondence between the transmission of the positioning reference signals used in N transmissions and the positioning reference signal resource configuration used by the first terminal, and the correspondence between the transmission of the positioning reference signals used in N transmissions and the positioning reference signal resource configuration used by the second terminal can be implicitly determined based on the transmission order of the double-sided RTT configured in the positioning request message.

For example, in case that the positioning type configured in the positioning request message is the double-sided RTT, and the transmission order of the double-sided RTT is further configured as "transmitting, receiving, transmitting", as shown in FIG. 5, the time domain resource allocation field in the control signaling indicates that the first transmission and the third transmission correspond to the positioning reference signal resources used by the first terminal, and the second transmission corresponds to the positioning reference signal resources used by the second terminal. That is, the time domain resource allocation field in the control signaling indicates the transmission slot in which the positioning reference signal is transmitted for the first time (i.e., the first terminal transmits the positioning reference signal 1), the transmission slot in which the positioning reference signal is transmitted for the third time (i.e., the first terminal transmits the positioning reference signal 3), and the transmission slot in which the positioning reference signal is transmitted for the second time (i.e., the second terminal transmits the positioning reference signal 2).

In case that the transmission order of the double-sided RTT is configured as "transmitting, transmitting, receiving", as shown in FIG. 5, the time domain resource allocation field in the control signaling indicates that the first transmission and the second transmission correspond to the positioning reference signal resources used by the first terminal, and the third transmission corresponds to the positioning reference signal resources used by the second terminal. The time domain resource allocation field in the control signaling indicates the transmission slots of the positioning reference signal resources corresponding to the three transmissions. That is, the time domain resource allocation field in the control signaling indicates the transmission slot in which the positioning reference signal is transmitted for the first time (i.e., the first terminal transmits the positioning reference signal 1), the transmission slot in which the positioning reference signal is transmitted for the second time (i.e., the first terminal transmits the positioning reference signal 2), and the transmission slot in which the positioning reference signal is transmitted for the third time (i.e., the second terminal transmits the positioning reference signal 3).

For example, in case that the positioning type configured in the positioning request message is the single-sided RTT, the time domain resource allocation field in the control signaling can be predefined to indicate that the first transmission corresponds to the positioning reference signal resources used by the first terminal, and the second transmission corresponds to the positioning reference signal resources used by the second terminal. In an embodiment, the time domain resource allocation field in the control signaling can be predefined to indicate that the first transmission corresponds to the positioning reference signal resources used by the second terminal, and the second transmission corresponds to the positioning reference signal resources used by the first terminal. The time domain resource allocation field in the control signaling indicates the transmission slots of the positioning reference signal resources corresponding to the two transmissions.

In the above embodiments, the implementation in which the control signaling includes one time domain resource allocation field is described as an example. The following describes an implementation in which the control signaling includes multiple time domain resource allocation fields in conjunction with FIG. 6.

FIG. 6 is a second schematic diagram of a first terminal transmitting a control signaling according to an embodiment of the present application. As shown in FIG. 6, the first terminal is preconfigured with a dedicated resource pool for SL positioning, and the dedicated resource pool includes time-frequency resources for positioning reference signals.

The first terminal determines to perform double-sided RTT positioning. The first terminal determines the positioning reference signal resources of the first terminal and the positioning reference signal resources of the second terminal from the dedicated resource pool through perception, and indicates the positioning reference signal resources of the first terminal and the positioning reference signal resources of the second terminal to the second terminal through the control signaling.

The control signaling can include multiple time domain resource allocation fields, which can indicate transmission slots of the positioning reference signals used in N transmissions, where the value of N can be one of {1, 2, 3}.

For the double-sided RTT positioning, the value of N is configured as 3. For the single-sided RTT, the value of N is configured as 2. The value of N can be configured through a higher layer signaling or determined by a positioning type in the positioning request message. For example, in case that the positioning type configured in the positioning request message is the single-sided RTT, it is implicitly determined that N=2. In case that the positioning type configured in the positioning request message is the double-sided RTT, it is implicitly determined that N=3. In FIG. 6, using the double-sided RTT positioning as an example, where N = 3.

In an embodiment, the positioning reference signals used in N transmissions can be determined based on positioning reference signal resources configured by a higher layer. For example, in FIG. 6, there are three transmissions of positioning reference signals, including two transmissions of positioning reference signals from the first terminal to the second terminal and one transmission of a positioning reference signal from the second terminal to the first terminal. Based on the higher layer configuration, the first terminal can obtain the positioning reference signal used in each transmission of the three transmissions of positioning reference signals, and accordingly, the second terminal can also obtain the positioning reference signal used in each transmission of the three transmissions of positioning reference signals.

As shown in FIG. 6, the control instruction includes two time domain resource allocation fields. The system predefines the first time domain resource allocation field to correspond to the positioning reference signal resources used by the first terminal, and the second time domain resource allocation field to correspond to the positioning reference signal resources used by the second terminal. That is, the first time domain resource allocation field is used to indicate the transmission slot in which the first terminal transmits the positioning reference signal, and the second time domain resource allocation field is used to indicate the transmission slot in which the second terminal transmits the positioning reference signal. Each time domain resource allocation field can indicate at least one transmission of the positioning reference signal. Furthermore, the number of the time domain resource allocation fields can be configured by a higher layer signaling.

In case that the positioning type configured in the positioning request message is the double-sided RTT, and the transmission order of the double-sided RTT is further configured as "transmitting, receiving, transmitting" or "transmitting, transmitting, receiving", as shown in FIG. 6, the first time domain resource allocation field in the control signaling indicates the transmission slot of the positioning reference signal resources used by the first terminal corresponding to the first transmission and the second transmission, and the second time domain resource allocation field in the control signaling indicates the transmission slot of the positioning reference signal resources used by the second terminal corresponding to one transmission.

FIG. 7 is a third schematic diagram of a first terminal transmitting a control signaling according to an embodiment of the present application. As shown in FIG. 7, the first terminal is preconfigured with a dedicated resource pool for SL positioning, and the dedicated resource pool includes time-frequency resources for positioning reference signals.

The first terminal determines to perform double-sided RTT positioning. The first terminal determines the positioning reference signal resources of the first terminal and the positioning reference signal resources of the second terminal from the dedicated resource pool through perception, and indicates the positioning reference signal resources of the first terminal and the positioning reference signal resources of the second terminal to the second terminal through the control signaling.

The control signaling can include a resource indication field and a time domain resource allocation field. The resource indication field is used to indicate the positioning reference signal used in each of N transmissions, and the time domain resource allocation field is used to indicate the transmission slot of the positioning reference signal used in each of N transmissions.

In an embodiment, the resource indication field in the control signaling is used to indicate the index of the positioning reference signal resource used in each of N transmissions of positioning reference signals. The positioning reference signal resource is configured by a higher layer signaling. For example, the higher layer signaling configures 6 positioning reference signal resources, and the indexes of these 6 positioning reference signal resources are represented as SL PRS_ID0, SL PRS_ID1, SL PRS_ID2, SL PRS_ID3, SL PRS_ID4, and SL PRS_ID5, respectively. Assuming that the double-sided RTT positioning is configured, the time domain resource allocation field indicates N=three transmissions, and the corresponding resource indication field for positioning reference signal indicates SL PRS_ID1 configuration, SL PRS_ID3 configuration, and SL PRS_ID5 configuration, respectively, indicating that the first transmission of the positioning reference signal resource uses the positioning reference signal resource corresponding to SL PRS_ID1 configured by the higher layer, the second transmission of the positioning reference signal resource uses the positioning reference signal resource corresponding to SL PRS_ID3 configured by the higher layer, and the third transmission of the positioning reference signal resource uses the positioning reference signal resource corresponding to SL PRS_ID5 configured by the higher layer.

In an embodiment, the number of the time domain resource allocation fields in the control signaling can also be multiple, and each resource indication field indicates the index of the positioning reference signal resource in corresponding time domain resource allocation field.

In the embodiments corresponding to FIGS. 5 to 7, in case that a dedicated resource pool is configured, the control signaling can also include a resource symbol indication field. When a positioning request message is configured with the single-sided RTT positioning or the double-sided RTT positioning without reporting, the resource symbol indication field can indicate the start symbol position of the transmitted positioning reference signal resource within the slot.

In the above embodiments, a process is described in which, in case that the positioning reference signals used by the first terminal and the second terminal are resources in a dedicated resource pool, how the positioning reference signals used in the sidelink-positioning are indicated by the control signaling. Below, with reference to FIG. 8, a process is described in which, in case that the positioning reference signals used by the first terminal and the second terminal are resources in a common resource pool, how the positioning reference signals used in the positioning reference signal transmissions are indicated by the control signaling.

FIG. 8 is a third schematic diagram of a first terminal transmitting a control signaling according to an embodiment of the present application. As shown in FIG. 8, the first terminal is preconfigured with a shared resource pool for SL positioning and SL communication. The shared resource pool includes both PSSCH time frequency resources for communication and time frequency resources for positioning reference signals.

The first terminal determines to perform double-sided RTT positioning. The first terminal determines the positioning reference signal resources of the first terminal and/or the positioning reference signal resources of the second terminal from the shared resource pool through perception, and indicates the positioning reference signal resources of the first terminal and/or the positioning reference signal resources of the second terminal to the second terminal through the control signaling.

The control signaling includes a two-stage control signaling, the first-stage control signaling uses the SCI format 1-A format defined in Rel-17. By setting one or more information fields in the SCI format 1-A in Rel-17 to specific bit values, it is indicated that the PSSCH resources corresponding to this SCI format 1-A include the positioning reference signal resource.

In an embodiment, the value of the second-stage SCI format field in SCI format 1-A is set to the reserved bit "11", indicating that the positioning reference signal resource exists in the corresponding PSSCH resources.

Table 1 below illustrates different values for the second-stage SCI format field, where the values for the second-stage SCI format field include "00", "01", "10", and "11", with "11" representing a spare field. In an embodiment, when the value of the second-stage SCI format field in SCI format 1-A is set to the reserved bit "11", it is indicated that the positioning reference signal resource exists in the corresponding PSSCH resources.

Table 1

| value of second-stage SCI format field | second-stage SCI format |
|---|---|
| 00 | SCI format 2-A |
| 01 | SCI format 2-B |
| 10 | SCI format 2-C |
| 11 (spare field) | positioning reference signal resource exists |

Furthermore, the reserved bit "11" can also correspond to an additional second-stage control signaling format, expressed as SCI format 2-D. This additional second-stage control signaling can indicate at least one of the following (2.1) - (2.3):

(2.1) Indicates whether each PSSCH resource transmission indicated by SCI format 1-A includes the positioning reference signal resource.

For example, the time domain resource allocation field in SCI format 1-A indicates N = 3 PSSCH transmissions. In this case, SCI format 2-D can include a 3-bit positioning reference signal existence field, with each bit corresponding to one PSSCH transmission. A value of 0 indicates that the PSSCH transmission does not include the positioning reference signal resource, while a value of 1 indicates that the PSSCH transmission includes the positioning reference signal resource.

(2.2) Indicates the index of the positioning reference signal resource corresponding to each transmission of the positioning reference signal resource indicated by SCI format 1-A. The implementation of the index of the positioning reference signal resource can be found in the relevant description of the embodiment of FIG. 7 and will not be repeated here.

(2.3) Indicates one or more of the time domain information, frequency domain information, and power information of the configuration of the positioning reference signal resource corresponding to each transmission of the positioning reference signal resource indicated by SCI format 1-A.

In the embodiment corresponding to FIG. 8, in case that a shared resource pool is configured, the second-stage control signaling, such as SCI format 2-D, can also include a resource symbol indication field, and the resource indication field is used to indicate the positioning reference signal used in each of N transmissions.

In summary, in case that the first terminal and the second terminal determine the positioning reference signal resources from the dedicated resource pool, the first terminal indicates the positioning reference signals used in N transmissions through the first-stage control signaling. The control signaling includes one or more time domain resource allocation fields, which can indicate the positioning reference signals used in N transmissions. When one time domain resource allocation field is used, the transmission of the positioning reference signals used in N transmissions correspond to the positioning reference signal resources used by the first terminal and the positioning reference signal resources used by the second terminal. This correspondence is determined based on the transmission order of the RTT configured by the higher layer. When multiple time domain resource allocation fields are used, the system predefines a correspondence between each time domain resource allocation field and the positioning reference signal resources used by the first terminal and the positioning reference signal resources used by the second terminal. The control signaling can also include one or more resource indication fields, which are used to indicate the index of the positioning reference signal resource used in each transmission of the positioning reference signal. In case that the positioning request message is configured with the RTT positioning without reporting, the control signaling also includes a positioning reference signal resource symbol indication field, which is used to indicate the symbol position of the positioning reference signal used in each of N transmissions of positioning reference signals within the corresponding transmission slot.

In case that the first terminal and the second terminal determine the positioning reference signal resources from the shared resource pool, the first terminal indicates the positioning reference signals used in the positioning reference signal transmissions through the two-stage control signaling. In the first-stage control signaling, by setting one or more information fields in the SCI format 1-A in Rel-17 to specific bit values, it is indicated whether a positioning reference signal resource exists in the PSSCH resources corresponding to this SCI format 1-A. In an embodiment, a value of a second-stage SCI format field in the SCI format 1-A is set to a reserved bit "11" for indication. The second-stage control signaling can include one or more of the resource indication field, the resource symbol indication field, and the existence indication field.

In summary, the embodiment of the present application provides a terminal positioning method, where the first terminal transmits a control signaling to a second terminal, the control signaling is used to indicate transmission information of the positioning reference signals used in the sidelink-positioning, and the transmission information is used for positioning of the first terminal or the second terminal. After the transmission information of the positioning reference signals used in the sidelink-positioning is indicated by the control signaling, the positioning reference signals can be transmitted between the first terminal and the second terminal based on the transmission information, and the round-trip time between the first terminal and the second terminal can be determined by the information of the time when the first terminal and the second terminal transmit the positioning reference signals, so that the distance between the first terminal and the second terminal can be determined based on the round-trip time, and the first terminal or the second terminal can be located based on the distance between the first terminal and the second terminal. In the present application, the first terminal transmits a control signaling to the second terminal to indicate transmission information of the positioning reference signals used in the sidelink-positioning, realizing resource allocation of the positioning reference signals used for positioning in the SL system, and thus realizing terminal positioning in the SL system.

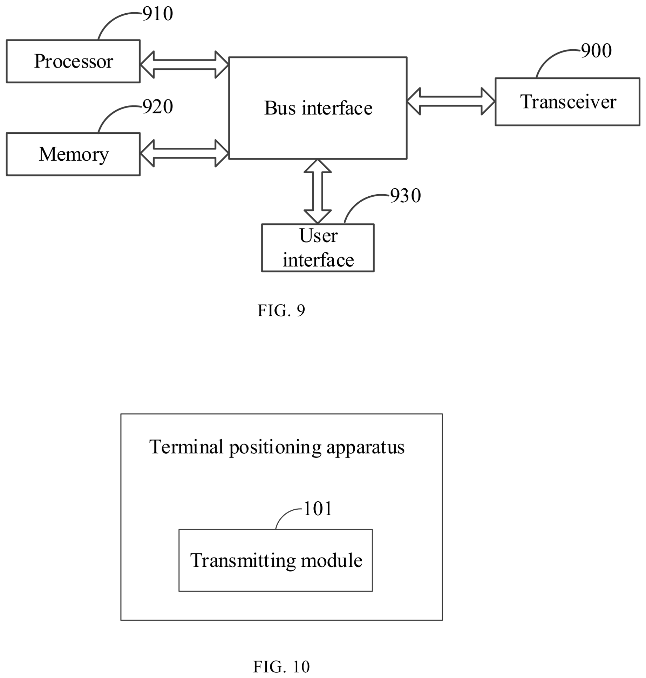

FIG. 9 is a schematic structural diagram of a first terminal according to an embodiment of the present application. As shown in FIG. 9, the first terminal includes a memory 920, a transceiver 900, and a processor 910.

The memory 920 is used to store a computer program, the transceiver 900 is used to transmit and receive data under control of the processor 910, and the processor 910 is used to read the computer program in the memory 920 and perform following operation:

transmitting a control signaling to a second terminal, where the control signaling is used to indicate transmission information of positioning reference signals used in sidelink-positioning, and the transmission information is used for positioning of the first terminal or the second terminal.

In FIG. 9, the bus architecture can include any number of interconnected buses and bridges, which are connected together by various circuits such as one or more processors represented by the processor 910 and the memory represented by memory 920. The bus architecture can also connect various other circuits such as peripheral devices, voltage regulators, and power management circuits, which are well known in the art and are therefore not further described herein. The bus interface provides an interface. The transceiver 900 can be a plurality of components, including a transmitter and a receiver, providing a unit for communicating with various other apparatuses on a transmission medium, such as a wireless channel, a wired channel, an optical cable, and the like. For different user devices, the user interface 930 can also be an interface capable of connecting external or internal devices as required, and the connected devices include but are not limited to a keypad, a display, a speaker, a microphone, a joystick, and the like.

The processor 910 is responsible for managing the bus architecture and general processing, and the memory 920 can store data used by the processor 910 when performing operations.

In some embodiments, the processor 910 can be a central processing unit (CPU), an application specific integrated circuit (ASIC), a field programmable gate array (FPGA), or a complex programmable logic device (CPLD). The processor can also take the form of a multicore architecture.

The processor calls the computer program stored in the memory, so as to execute any of the methods according to the embodiments of the present application according to the obtained executable instructions. The processor and the memory can also be arranged physically separately.

In some embodiments, in case that a number of transmissions of the positioning reference signals used in the sidelink-positioning is N, N is an integer greater than or equal to 1, the control signaling includes at least one of following:

a time domain resource allocation field, where the time domain resource allocation field is used to indicate a transmission slot of a positioning reference signal used in each of N transmissions;

a resource indication field, where the resource indication field is used to indicate a positioning reference signal used in each of N transmissions;

a resource symbol indication field, where the resource symbol indication field is used to indicate a symbol position of a positioning reference signal used in each of N transmissions within a corresponding transmission slot;

an existence indication field, where the existence indication field is used to indicate whether at least one positioning reference signal exists in each transmission resource of a physical sidelink shared channel, and the at least one positioning reference signal belongs to positioning reference signals used in N transmissions;

an existence indication information, where the existence indication information is used to indicate whether positioning reference signals used in N transmissions exist in transmission resources of a physical sidelink shared channel; or

at least one of time domain information, frequency domain information, or power information of positioning reference signals used in N transmissions.

In some embodiments,
in case that a number of the time domain resource allocation field is one, the time domain resource allocation field includes the transmission slot of the positioning reference signal used in each of N transmissions.

In some embodiments,
the transmission slot of the positioning reference signal used in each of N transmissions is determined based on a transmission order of the positioning reference signals used in the sidelink-positioning configured by a higher layer.

In some embodiments,
in case that a number of the time domain resource allocation fields is at least two, a first time domain resource allocation field includes a transmission slot of a positioning reference signal used in the sidelink-positioning corresponding to the first terminal, a second time domain resource allocation field includes a transmission slot of a positioning reference signal used in the sidelink-positioning corresponding to the second terminal, and the positioning reference signals used in N transmissions include the positioning reference signal corresponding to the first terminal and/or the positioning reference signal corresponding to the second terminal.

In some embodiments,
correspondence between the at least two time domain resource allocation fields and the first terminal and the second terminal is predefined.

In some embodiments,
a number of the time domain resource allocation field is determined based on a higher layer configuration.

In some embodiments,
the positioning reference signal used in each of N transmissions is determined based on a positioning reference signal resource configured by a higher layer.

In some embodiments,
in case that a number of the time domain resource allocation fields and a number of the resource indication fields are multiple, the multiple time domain resource allocation fields correspond one-to-one to the multiple resource indication fields.

In some embodiments,
in case that a transmission type of the positioning reference signal used in the sidelink-positioning is a non-reporting sidelink-positioning reference signal transmission type, a number of the resource symbol indication field is at least one.

In some embodiments,
in case that the control signaling includes a two-stage control signaling, one or more of the resource symbol indication field, the resource indication field, and the existence indication field are set in a second-stage control signaling.

In some embodiments,
in case that the control signaling includes a two-stage control signaling, the existence indication information is indicated by setting one or more information fields in sidelink control information (SCI) format 1-A in Rel-17 to specific bit values.

In some embodiments,
a value of a second-stage SCI format field in the SCI format 1-A is set to a reserved bit "11".

It should be noted here that the above-mentioned first terminal according to the embodiment of the present application can implement all the method steps implemented by the above-mentioned method embodiment in which the execution subject is the first terminal, and can achieve the same technical effect. The parts and beneficial effects of this embodiment that are the same as those of the method embodiment will not be described in detail here.

FIG. 10 is a schematic structural diagram of a terminal positioning apparatus according to an embodiment of the present application. As shown in FIG. 10, the terminal positioning apparatus includes:
a transmitting module 101, used to transmit a control signaling to a second terminal, where the control signaling is used to indicate transmission information of positioning reference signals used in sidelink-positioning, and the transmission information is used for positioning of the first terminal or the second terminal.

In some embodiments, in case that a number of transmissions of the positioning reference signals used in the sidelink-positioning is N, N is an integer greater than or equal to 1, the control signaling includes at least one of following:

a time domain resource allocation field, where the time domain resource allocation field is used to indicate a transmission slot of a positioning reference signal used in each of N transmissions;

a resource indication field, where the resource indication field is used to indicate a positioning reference signal used in each of N transmissions;

a resource symbol indication field, where the resource symbol indication field is used to indicate a symbol position of a positioning reference signal used in each of N transmissions within a corresponding transmission slot;

an existence indication field, where the existence indication field is used to indicate whether at least one positioning reference signal exists in each transmission resource of a physical sidelink shared channel, and the at least one positioning reference signal belongs to positioning reference signals used in N transmissions;

an existence indication information, where the existence indication information is used to indicate whether positioning reference signals used in N transmissions exist in transmission resources of a physical sidelink shared channel; or

at least one of time domain information, frequency domain information, or power information of positioning reference signals used in N transmissions.

In some embodiments,
in case that a number of the time domain resource allocation field is one, the time domain resource allocation field includes the transmission slot of the positioning reference signal used in each of N transmissions.

In some embodiments,
the transmission slot of the positioning reference signal used in each of N transmissions is determined based on a transmission order of the positioning reference signals used in the sidelink-positioning configured by a higher layer.

In some embodiments,
in case that a number of the time domain resource allocation fields is at least two, a first time domain resource allocation field includes a transmission slot of a positioning reference signal used in the sidelink-positioning corresponding to the first terminal, a second time domain resource allocation field includes a transmission slot of a positioning reference signal used in the sidelink-positioning corresponding to the second terminal, and the positioning reference signals used in N transmissions include the positioning reference signal corresponding to the first terminal and/or the positioning reference signal corresponding to the second terminal.

In some embodiments,
correspondence between the at least two time domain resource allocation fields and the first terminal and the second terminal is predefined.

In some embodiments,
a number of the time domain resource allocation field is determined based on a higher layer configuration.

In some embodiments,
the positioning reference signal used in each of N transmissions is determined based on a positioning reference signal resource configured by a higher layer.

In some embodiments,
in case that a number of the time domain resource allocation fields and a number of the resource indication fields are multiple, the multiple time domain resource allocation fields correspond one-to-one to the multiple resource indication fields.

In some embodiments,

in case that a transmission type of the positioning reference signal used in the sidelink-positioning is a non-reporting sidelink-positioning reference signal transmission type, a number of the resource symbol indication field is at least one.

In some embodiments,

in case that the control signaling includes a two-stage control signaling, one or more of the resource symbol indication field, the resource indication field, and the existence indication field are set in a second-stage control signaling.

In some embodiments,

in case that the control signaling includes a two-stage control signaling, the existence indication information is indicated by setting one or more information fields in sidelink control information (SCI) format 1-A in Rel-17 to specific bit values.

In some embodiments,

a value of a second-stage SCI format field in the SCI format 1-A is set to a reserved bit "11".

The terminal positioning apparatus according to the embodiment of the present application can implement all the method steps implemented by the above-mentioned method embodiment in which the execution subject is the first terminal, and can achieve the same technical effect. The parts and beneficial effects of this embodiment that are the same as those of the method embodiment will not be described in detail here.

It should be noted that the division of units/modules in the above- mentioned embodiments of the present application is schematic and is merely a logical functional division. In actual implementation, other division methods can be used. Furthermore, the functional units in the various embodiments of the present application can be integrated into a single processing unit, or each unit can exist physically separately, or two or more units can be integrated into a single unit. The above-mentioned integrated units can be implemented in the form of hardware or software functional units.

when the integrated unit is implemented in the form of a software functional unit and sold or used as an independent product, it can be stored in a processor-readable storage medium. Based on this understanding, the solution of the present application, or the part that contributes to the prior art, or all or part of the solution can be embodied in the form of a software product. The computer software product is stored in a storage medium and includes a number of instructions for enabling a computer device (which can be a personal computer, server, or network device, etc.) or a processor to execute all or part of the steps of the method described in each embodiment of the present application. The aforementioned storage medium includes a U disk, a mobile hard disk, a read-only memory (ROM), a random access memory (RAM), a disk, an optical disk, and other media that can store program code.

In some embodiments, a computer-readable storage medium is further provided, where the computer-readable storage medium stores a computer program, and the computer program is used to cause a computer to execute the terminal positioning method provided by the above-mentioned method embodiments.

The above-mentioned computer-readable storage medium according to the embodiment of the present application can implement all the method steps implemented by the above-mentioned method embodiments, and can achieve the same technical effects. The parts and beneficial effects of this embodiment that are the same as those of the method embodiment will not be described in detail here.

It should be noted that the computer-readable storage medium can be any available medium or data storage device that can be accessed by the processor, including but not limited to magnetic storage (such as floppy disks, hard disks, magnetic tapes, magneto-optical disks (MO), etc.), optical storage (such as CDs, DVDs, BDs, HVDs, etc.), and semiconductor storage (such as ROMs, EPROMs, EEPROMs, non-volatile memories (NAND FLASH), solid-state drives (SSDs)), etc.

It should also be noted that the terms "first", "second" and the like in the embodiments of the present application are used to distinguish similar objects, and are not used to describe a specific order or precedence. It should be understood that the terms used in this manner are interchangeable where appropriate, such that the embodiments of the present application can be implemented in an order other than that illustrated or described herein. Furthermore, the terms "first" and "second" generally distinguish objects of the same type, and do not limit the number of objects. For example, the first object can be one or more.

"And/or" in the embodiments of the application describes the association relationship of associated objects, indicating that three relationships can exist. For example, A and/or B can mean A exists alone, A and B exist at the same time, and B exists alone. The character "/" generally indicates that the previous and next associated objects are in an "or" relationship.

In the embodiments of the application, the term "multiple" refers to two or more than two, and other quantifiers are similar thereto.

The solutions provided by the embodiments of the present application can be applied to a variety of systems, particularly 5G systems. For example, applicable systems can include the global system of mobile communication (GSM) system, the code division multiple access (CDMA) system, the wideband code division multiple access (WCDMA) general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, and the 5G new radio (NR) system. These various systems include terminal devices and network device. The systems can also include core network components, such as the evolved packet system (EPS) and the 5G system (5GS).

The embodiments of the present application relate to terminal devices, which can refer to devices that provide voice and/or data connectivity to users, handheld devices with wireless connectivity, or other processing devices connected to a wireless modem. The names of terminal devices can vary in different systems. For example, in 5G systems, terminal devices can be referred to as user equipment (UE). A wireless terminal device can communicate with one or more core networks (CNs) via a radio access network (RAN). The wireless terminal device can be a mobile terminal device, such as a mobile phone (also called a "cellular" phone), and a computer with the mobile terminal device. For example, it can be a portable, pocket-sized, handheld, built-in computer, or in-vehicle mobile device that exchanges voice and /or data with the radio access network. Examples include a personal communication service (PCS) phone, a cordless phone, a session initiated protocol (SIP) phone, a wireless local loop (WLL) station, a personal digital assistants (PDA) and the like. The wireless terminal device can also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

The embodiments of the present application relate to network device, which can refer to base stations, and the base stations can include multiple cells providing services to terminals. Depending on the specific application scenario, a base station can also be referred to as an access point, or can be a device in an access network that communicates with a wireless terminal device via one or more sectors over the air interface, or can be referred to as other names. The network device can be used to interchange received air frames with internet protocol (IP) packets, acting as a router between the wireless terminal device and the rest of the access network, which can include an internet protocol (IP) communication network. The network device can also coordinate attribute management of the air interface. For example, the network device in the embodiments of the present application can be base transceiver stations (BTSs) in the global system for mobile communications (GSM) or code division multiple access (CDMA), NodeBs in the wide-band code division multiple access (WCDMA), evolutionary NodeBs (eNBs or e-nodeBs) in the long term evolution (LTE) system, 5G base stations (gNBs) in the next generation 5G next generation system, home evolved NodeBs (HeNBs), relay nodes, femtos, picos, etc., and are not limited in the embodiments of the present application. In some network structures, the network device can include centralized unit (CU) nodes and distributed unit (DU) nodes, and the centralized unit and the distributed unit can also be geographically separated.

The network device and the terminal device can each use one or more antennas for multiple input multiple output (MIMO) transmission. MIMO transmission can be either single user MIMO (SU-MIMO) or multi user MIMO (MU-MIMO). Depending on the form and number of antennas, MIMO transmission can be 2D-MIMO, 3D-MIMO, FD-MIMO, or massive-MIMO, or can be diversity transmission, precoding, or beamforming.

Those skilled in the art will appreciate that the embodiments of the present application can be provided as methods, systems, or computer program products. Thus, the present application can take the form of an entirely hardware embodiment, an entirely software embodiment, or an embodiment combining software and hardware. Furthermore, the present application can take the form of a computer program product implemented on one or more computer-usable storage media (including but not limited to magnetic disk storage and optical storage) including computer-usable program codes.

The present application is described with reference to flowcharts and/or block diagrams of methods, devices (systems), and computer program products according to the embodiments of the present application. It should be understood that each process and/or block in the flowcharts and/or block diagrams, as well as combinations of processes and/or blocks in the flowcharts and/or block diagrams, can be implemented by computer-executable instructions. These computer-executable instructions can be provided to a processor of a general-purpose computer, a special-purpose computer, an embedded processor, or other programmable data processing device to produce a machine, such that the instructions executed by the processor of the computer or other programmable data processing device produce an apparatus for implementing the functions specified in one or more processes in the flowcharts and/or one or more blocks in the block diagrams.

These processor-executable instructions can also be stored in a processor-readable memory that can direct a computer or other programmable data processing device to operate in a specific manner, so that the instructions stored in the processor-readable memory produce a product including an instruction apparatus that implements the functions specified in one or more processes in the flowchart and/or one or more blocks in the block diagram.

These processor-executable instructions can also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

Obviously, those skilled in the art can make various changes and modifications to the present application without departing from the spirit and scope of the present application. Thus, if these modifications and variations of the present application fall within the scope of the claims of the present application and their equivalents, the present application is intended to include these modifications and variations.

**Claims**

1. A terminal positioning method, performed by a first terminal, comprising:
   transmitting a control signaling to a second terminal, wherein the control signaling is used to indicate transmission information of positioning reference signals used in sidelink-positioning.

2. The method of claim 1, wherein the control signaling comprises at least one of following:

   a time domain resource allocation field, wherein the time domain resource allocation field is used to indicate a transmission slot of a positioning reference signal used in each of N transmissions;
   a resource indication field, wherein the resource indication field is used to indicate a positioning reference signal used in each of N transmissions;
   a resource symbol indication field, wherein the resource symbol indication field is used to indicate a symbol position of a positioning reference signal used in each of N transmissions within a corresponding transmission slot;
   an existence indication field, wherein the existence indication field is used to indicate that at least one positioning reference signal exists in each transmission resource of a physical sidelink shared channel, and the positioning reference signal belongs to positioning reference signals used in N transmissions;
   an existence indication information, wherein the existence indication information is used to indicate scheduling of a positioning reference signal; or
   at least one of time domain information, frequency domain information, or power information of positioning reference signals used in N transmissions.

3. The method of claim 2, wherein:
   in case that a number of the time domain resource allocation field is one, the time domain resource allocation field comprises the transmission slot of the positioning reference signal used in each of N transmissions.

4. The method of claim 3, wherein:
   the transmission slot of the positioning reference signal used in each of N transmissions is determined based on a transmission order of the positioning reference signals used in the sidelink-positioning configured by a higher layer.

5. The method of claim 2, wherein:
   in case that a number of the time domain resource allocation fields is at least two, a first time domain resource allocation field comprises a transmission slot of a positioning reference signal used in the sidelink-positioning corresponding to the first terminal, a second time domain resource allocation field comprises a transmission slot of a positioning reference signal used in the sidelink-positioning corresponding to the second terminal, and the positioning reference signals used in N transmissions comprise the positioning reference signal corresponding to the first terminal and/or the positioning reference signal corresponding to the second terminal.

6. The method of claim 5, wherein:
   correspondence between the at least two time domain resource allocation fields and the first terminal and the second terminal is predefined.

7. The method of any of claims 2 to 6, wherein:
   a number of the time domain resource allocation field is determined based on a higher layer configuration.

8. The method of any of claims 2 to 6, wherein:
   the positioning reference signal used in each of N transmissions is determined based on a positioning reference signal resource configured by a higher layer.

9. The method of any of claims 2 to 6, wherein:
   in case that a number of the time domain resource allocation fields and a number of the resource indication fields are multiple, the multiple time domain resource allocation fields correspond one-to-one to the multiple resource indication fields.

10. The method of any of claims 2 to 6, wherein:
in case that a transmission type of the positioning reference signal used in the sidelink-positioning is a non-reporting sidelink-positioning reference signal transmission type, a number of the resource symbol indication field is at least one.

11. The method of any of claims 2 to 6, wherein:
in case that the control signaling comprises a two-stage control signaling, one or more of the resource symbol indication field, the resource indication field, and the existence indication field are set in a second-stage control signaling.

12. The method of any of claims 2 to 6, wherein:
in case that the control signaling comprises a two-stage control signaling, the existence indication information is indicated by setting one or more information fields in sidelink control information, SCI, format 1-A in Rel-17 to specific bit values.

13. The method of claim 12, wherein:
a value of a second-stage SCI format field in the SCI format 1-A is set to a reserved bit "11".

14. A first terminal, comprising a memory, a transceiver, and a processor,
wherein the memory is used to store a computer program, the transceiver is used to transmit and receive data under control of the processor, and the processor is used to read the computer program in the memory and perform following operation:
transmitting a control signaling to a second terminal, wherein the control signaling is used to indicate transmission information of positioning reference signals used in sidelink-positioning.

15. The first terminal of claim 14, wherein the control signaling comprises at least one of following:

a time domain resource allocation field, wherein the time domain resource allocation field is used to indicate a transmission slot of a positioning reference signal used in each of N transmissions, and N is an integer greater than or equal to 1;
a resource indication field, wherein the resource indication field is used to indicate a positioning reference signal used in each of N transmissions;
a resource symbol indication field, wherein the resource symbol indication field is used to indicate a symbol position of a positioning reference signal used in each of N transmissions within a corresponding transmission slot;
an existence indication field, wherein the existence indication field is used to indicate that at least one positioning reference signal exists in each transmission resource of a physical sidelink shared channel, and the positioning reference signal belongs to positioning reference signals used in N transmissions;
an existence indication information, wherein the existence indication information is used to indicate scheduling of a positioning reference signal; or
at least one of time domain information, frequency domain information, or power information of positioning reference signals used in N transmissions.

16. The first terminal of claim 15, wherein:
in case that a number of the time domain resource allocation field is one, the time domain resource allocation field comprises the transmission slot of the positioning reference signal used in each of N transmissions.

17. The first terminal of claim 16, wherein:
the transmission slot of the positioning reference signal used in each of N transmissions is determined based on a transmission order of the positioning reference signals used in the sidelink-positioning configured by a higher layer.

18. The first terminal of claim 15, wherein:
in case that a number of the time domain resource allocation fields is at least two, a first time domain resource allocation field comprises a transmission slot of a positioning reference signal used in the sidelink-positioning corresponding to the first terminal, a second time domain resource allocation field comprises a transmission slot of a positioning reference signal used in the sidelink-positioning corresponding to the second terminal, and the positioning reference signals used in N transmissions comprise the positioning reference signal corresponding to the first terminal and/or the positioning reference signal corresponding to the second terminal.

**19.** The first terminal of claim 18, wherein:
correspondence between the at least two time domain resource allocation fields and the first terminal and the second terminal is predefined.

**20.** The first terminal of any of claims 15 to 19, wherein:
a number of the time domain resource allocation field is determined based on a higher layer configuration.

**21.** The first terminal of any of claims 15 to 19, wherein:
the positioning reference signal used in each of N transmissions is determined based on a positioning reference signal resource configured by a higher layer.

**22.** The first terminal of any of claims 15 to 19, wherein:
in case that a number of the time domain resource allocation fields and a number of the resource indication fields are multiple, the multiple time domain resource allocation fields correspond one-to-one to the multiple resource indication fields.

**23.** The first terminal of any of claims 15 to 19, wherein:
in case that a transmission type of the positioning reference signal used in the sidelink-positioning is a non-reporting sidelink-positioning reference signal transmission type, a number of the resource symbol indication field is at least one.

**24.** The first terminal of any of claims 15 to 19, wherein:
in case that the control signaling comprises a two-stage control signaling, one or more of the resource symbol indication field, the resource indication field, and the existence indication field are set in a second-stage control signaling.

**25.** The first terminal of any of claims 15 to 19, wherein:
in case that the control signaling comprises a two-stage control signaling, the existence indication information is indicated by setting one or more information fields in sidelink control information, SCI, format 1-A in Rel-17 to specific bit values.

**26.** The first terminal of claim 25, wherein:
a value of a second-stage SCI format field in the SCI format 1-A is set to a reserved bit "11".

**27.** A terminal positioning apparatus, comprising:
a transmitting module, used to transmit a control signaling to a second terminal, wherein the control signaling is used to indicate transmission information of positioning reference signals used in sidelink-positioning.

**28.** The apparatus of claim 27, wherein the control signaling comprises at least one of following:

a time domain resource allocation field, wherein the time domain resource allocation field is used to indicate a transmission slot of a positioning reference signal used in each of N transmissions, and N is an integer greater than or equal to 1;
a resource indication field, wherein the resource indication field is used to indicate a positioning reference signal used in each of N transmissions;
a resource symbol indication field, wherein the resource symbol indication field is used to indicate a symbol position of a positioning reference signal used in each of N transmissions within a corresponding transmission slot;
an existence indication field, wherein the existence indication field is used to indicate that at least one positioning reference signal exists in each transmission resource of a physical sidelink shared channel, and the positioning reference signal belongs to positioning reference signals used in N transmissions;
an existence indication information, wherein the existence indication information is used to indicate scheduling of a positioning reference signal; or
at least one of time domain information, frequency domain information, or power information of positioning reference signals used in N transmissions.

**29.** The apparatus of claim 28, wherein:
in case that a number of the time domain resource allocation field is one, the time domain resource allocation field comprises the transmission slot of the positioning reference signal used in each of N transmissions.

30. The apparatus of claim 29, wherein:
the transmission slot of the positioning reference signal used in each of N transmissions is determined based on a transmission order of the positioning reference signals used in the sidelink-positioning configured by a higher layer.

31. The apparatus of claim 28, wherein:
in case that a number of the time domain resource allocation fields is at least two, a first time domain resource allocation field comprises a transmission slot of a positioning reference signal used in the sidelink-positioning corresponding to the first terminal, a second time domain resource allocation field comprises a transmission slot of a positioning reference signal used in the sidelink-positioning corresponding to the second terminal, and the positioning reference signals used in N transmissions comprise the positioning reference signal corresponding to the first terminal and/or the positioning reference signal corresponding to the second terminal.

32. The apparatus of claim 31, wherein:
correspondence between the at least two time domain resource allocation fields and the first terminal and the second terminal is predefined.

33. The apparatus of any of claims 28 to 32, wherein:
a number of the time domain resource allocation field is determined based on a higher layer configuration.

34. The apparatus of any of claims 28 to 32, wherein:
the positioning reference signal used in each of N transmissions is determined based on a positioning reference signal resource configured by a higher layer.

35. The apparatus of any of claims 28 to 32, wherein:
in case that a number of the time domain resource allocation fields and a number of the resource indication fields are multiple, the multiple time domain resource allocation fields correspond one-to-one to the multiple resource indication fields.

36. The apparatus of any of claims 28 to 32, wherein:
in case that a transmission type of the positioning reference signal used in the sidelink-positioning is a non-reporting sidelink-positioning reference signal transmission type, a number of the resource symbol indication field is at least one.

37. The apparatus of any of claims 28 to 32, wherein:
in case that the control signaling comprises a two-stage control signaling, one or more of the resource symbol indication field, the resource indication field, and the existence indication field are set in a second-stage control signaling.

38. The apparatus of any of claims 28 to 32, wherein:
in case that the control signaling comprises a two-stage control signaling, the existence indication information is indicated by setting one or more information fields in sidelink control information, SCI, format 1-A in Rel-17 to specific bit values.

39. The apparatus of claim 38, wherein:
a value of a second-stage SCI format field in the SCI format 1-A is set to a reserved bit "11".

40. A computer-readable storage medium storing a computer program, wherein the computer program is used to cause a computer to execute the terminal positioning method of any of claims 1 to 13.

FIG. 1

FIG. 2

Transmitting a control signaling to a second terminal, where the control signaling is used to indicate transmission information of positioning reference signals used in sidelink-positioning, and the transmission information is used for positioning of the first terminal or the second terminal.

S31

FIG. 3

Single-sided RTT positioning

First terminal

Positioning reference signal 1

Positioning reference signal 2

Second terminal

Double-sided RTT positioning（transmitting, receiving, transmitting）

First terminal

Positioning reference signal 1

Positioning reference signal 2

Positioning reference signal 3

Second terminal

Double-sided RTT positioning（transmitting, transmitting, receiving）

First terminal

Positioning reference signal 1

Positioning reference signal 2

Positioning reference signal 3

Second terminal

FIG. 4

Control signaling (one time
domain resource allocation field)

First terminal                    Second terminal

FIG. 5

Control signaling (first time domain resource
allocation field, second time domain resource
allocation field)

First terminal                              Second terminal

FIG. 6

Control signaling (resource indication field,
time domain resource allocation field)

First terminal                              Second terminal

FIG. 7

First-stage control signaling (time
domain resource allocation field)

First terminal

Second-stage control signaling (one or more of a
resource symbol indication field, a resource
indication field, and an existence indication field)

Second terminal

FIG. 8

910

Processor

920

Memory

Bus interface

900

Transceiver

930

User
interface

FIG. 9

Terminal positioning apparatus

101

Transmitting module

FIG. 10

# EP 4 694 214 A1

## INTERNATIONAL SEARCH REPORT

| International application No. |
|---|
| **PCT/CN2024/086462** |

### A. CLASSIFICATION OF SUBJECT MATTER

H04W4/02(2018.01)i; H04L5/00(2006.01)i; H04W64/00(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNABS; CNTXT; VEN; VCN; USTXT; EPTXT; WOTXT; ENTXT; CNKI: 直通链路, 旁链路, 副链路, 边链路, 定位, 距离, 测距, 时隙, 双边, 单边, 时间, 时长, 时差, 时间差, sidelink, SL, position+, distance, slot+, time, single-sided, double-sided

### C. DOCUMENTS CONSIDERED TO BE RELEVANT

| Category* | Citation of document, with indication, where appropriate, of the relevant passages | Relevant to claim No. |
|---|---|---|
| X | CN 115706627 A (CICT CONNECTED AND INTELLIGENT TECHNOLOGIES CO., LTD.) 17 February 2023 (2023-02-17) description, paragraphs [0001]-[0265] and [0289]-[0394], and figures 1-15 | 1-40 |
| A | CN 115643636 A (VIVO MOBILE COMMUNICATION CO., LTD.) 24 January 2023 (2023-01-24) entire document | 1-40 |
| A | CN 114222931 A (BEIJING XIAOMI MOBILE SOFTWARE CO., LTD.) 22 March 2022 (2022-03-22) entire document | 1-40 |
| A | CN 112205008 A (BEIJING XIAOMI MOBILE SOFTWARE CO., LTD.) 08 January 2021 (2021-01-08) entire document | 1-40 |
| A | US 2020373993 A1 (HUAWEI TECHNOLOGIES CO., LTD.) 26 November 2020 (2020-11-26) entire document | 1-40 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 May 2024** | **24 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/086462**

**C.    DOCUMENTS CONSIDERED TO BE RELEVANT**

| Category* | Citation of document, with indication, where appropriate, of the relevant passages | Relevant to claim No. |
|---|---|---|
| A | US 2020059903 A1 (GUANGDONG OPPO MOBILE TELECOMMUNICATIONS CORP., LTD.) 20 February 2020 (2020-02-20) entire document | 1-40 |

Form PCT/ISA/210 (second sheet) (July 2022)

## INTERNATIONAL SEARCH REPORT
### Information on patent family members

International application No.

**PCT/CN2024/086462**

| Patent document cited in search report | | | Publication date (day/month/year) | Patent family member(s) | | | Publication date (day/month/year) |
|---|---|---|---|---|---|---|---|
| CN | 115706627 | A | 17 February 2023 | None | | | |
| CN | 115643636 | A | 24 January 2023 | None | | | |
| CN | 114222931 | A | 22 March 2022 | None | | | |
| CN | 112205008 | A | 08 January 2021 | None | | | |
| US | 2020373993 | A1 | 26 November 2020 | WO | 2019157911 | A1 | 22 August 2019 |
| | | | | US | 11539422 | B2 | 27 December 2022 |
| | | | | EP | 3751881 | A1 | 16 December 2020 |
| | | | | EP | 3751881 | A4 | 14 April 2021 |
| US | 2020059903 | A1 | 20 February 2020 | CA | 3041929 | A1 | 11 May 2018 |
| | | | | CA | 3041929 | C | 23 May 2023 |
| | | | | KR | 20190073506 | A | 26 June 2019 |
| | | | | BR | 112019008804 | A2 | 16 July 2019 |
| | | | | JP | 2019536345 | A | 12 December 2019 |
| | | | | JP | 6987137 | B2 | 22 December 2021 |
| | | | | TW | 201818751 | A | 16 May 2018 |
| | | | | WO | 2018081973 | A1 | 11 May 2018 |
| | | | | AU | 2016428406 | A1 | 13 June 2019 |
| | | | | AU | 2016428406 | B2 | 03 March 2022 |
| | | | | RU | 2727798 | C1 | 24 July 2020 |
| | | | | US | 11290994 | B2 | 29 March 2022 |
| | | | | SG | 11201903884 | WA | 30 May 2019 |
| | | | | MX | 2019005155 | A | 20 June 2019 |
| | | | | EP | 3506694 | A1 | 03 July 2019 |
| | | | | EP | 3506694 | A4 | 07 August 2019 |
| | | | | EP | 3506694 | B1 | 25 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310367892